# EUROPÄISCHE PATENTSCHRIFT

(11) **EP 1 966 565 B1**
(45) Veröffentlichungstag und Bekanntmachung des Hinweises auf die Patenterteilung: **10.02.2010**
(21) Anmeldenummer: 06840972.1
(22) Anmeldetag: 13.12.2006
(51) Int. Cl.: G01D 7/00

(54) **SCHALTKREIS-ANORDNUNG FÜR EIN FELDGERÄT**
CIRCUIT ARRANGEMENT FOR A FIELD DEVICE
ENSEMBLE CIRCUIT DE COMMUTATION POUR APPAREIL DE CHAMP

(30) Priorität: 27.12.2005 DE 102005062419; 27.12.2005 US 754471 P
(43) Veröffentlichungstag der Anmeldung: 10.09.2008
(60) Teilanmeldung: 09162391.8
(73) Patentinhaber: VEGA Grieshaber KG, 77709 Wolfach (DE)
(72) Erfinder: STAIGER, Holger, 78739 Hardt (DE)
(74) Vertreter: Kopf, Korbinian Paul
(86) Internationale Anmeldenummer: PCT/EP2006/012009
(87) Internationale Veröffentlichungsnummer: WO 2007/073868

(56) Entgegenhaltungen:
- EP-A- 0 944 160
- EP-A1- 1 202 145
- DE-A1- 19 527 660
- JP-A- 7 276 748

## Beschreibung

### Technisches Gebiet

Die Erfindung betrifft eine Schaltkreis-Anordnung für ein Feldgerät, eine Leuchteinrichtung für ein Feldgerätedisplaymodul, eine Beleuchtungsanordnung für ein Feldgerätedisplay, ein Verfahren zur Ansteuerung einer Leuchteinrichtung für ein Feldgerätedisplay, ein computerlesbares Medium mit einem Programm zur Ansteuerung einer Leuchteinrichtung für ein Feldgerätedisplay und ein Programmelement mit einem Programm zur Ansteuerung einer Leuchteinrichtung für ein Feldgerätedisplay.

### Hintergrund der Erfindung

Oftmals weisen Anzeigeeinrichtungen bzw. Displays zum Ablesen von Messwerten eines Feldgeräts, Sensors oder Messgerätes einen geringen Kontrast zu der Umgebung auf. Dadurch werden die Displays, insbesondere die Anzeige, gerade bei schlechten Lichtverhältnissen schwer ablesbar. Die Anzeigen müssen oftmals an Orten montiert werden, an denen wenig Licht zur Verfügung steht, ein Ablesen der Anzeige wird dabei oft schwierig und unkomfortabel.

Da Messgeräte oftmals an entfernten Orten eingesetzt werden, an denen keine Energieversorgung zur Verfügung steht, bereitet eine Energieversorgung von Anzeigen für Messgeräte Schwierigkeiten.

DE 195 27 660 A1 beschreibt ein Dosiergerät zum Bemessen einer Fluidmenge, mit einem Sensor, der über eine Stromspeisung versorgt wird und zur Übermittlung von Signalen mit einer elektronischen Auswerteeinheit verbunden ist, die aus dem Signal einen Messwert ableitet, wobei der Auswerteeinheit eine Eingabevorrichtung zugeordnet ist, zur Eingabe eines Messwert-Sollwertes und die Auswerteeinheit über eine Ausgabevorrichtung ein Stellglied ansteuert, wenn der Messwert den Sollwert erreicht, wobei die Auswerteeinheit mit einem Strom betrieben ist, der von der Stromspeisung des Sensors entnommen ist.

### Darstellung der Erfindung

Es ist eine Aufgabe der vorliegenden Erfindung, ein Feldgerät effizienter zu betreiben.

Demgemäß wird eine Schaltkreis-Anordnung für ein Feldgerät, eine Leuchteinrichtung für ein Feldgerätedisplay, eine Beleuchtungsanordnung für ein Feldgerätedisplay, ein Verfahren zur Ansteuerung einer Leuchteinrichtung für ein Feldgerätedisplay, ein computerlesbares Medium mit einem Programm zur Ansteuerung einer Leuchteinrichtung für ein Feldgerätedisplaymodul und ein Programmelement mit einem Programm zur Ansteuerung einer Leuchteinrichtung für ein Feldgerätedisplay geschaffen.

Gemäß einem exemplarischen Ausführungsbeispiel der vorliegenden Erfindung wird eine Schaltkreis-Anordnung für ein Feldgerät angegeben. Die Schaltkreisanordnung weist eine Leistungsmesseinrichtung auf, die zum Bestimmen einer in einem Feldgerät vorhandenen Leistung eingerichtet ist. Außerdem weist die Schaltkreis-Anordnung eine Leistungsverteilungseinrichtung auf, wobei die Leistungsverteilungseinrichtung eingerichtet ist zum Bestimmen, ob überschüssige Leistung in dem Feldgerät für den Betrieb einer Displaybeleuchtung vorhanden ist. Außerdem ist die Leistungsverteilungseinrichtung eingerichtet die überschüssige Leistung an eine Displaybeleuchtungsansteuereinrichtung weiterzuleiten.

Gemäß einem weiteren Ausführungsbeispiel der vorliegenden Erfindung wird eine Leuchteinrichtung für ein Feldgerätedisplaymodul angegeben. Die Leuchteinrichtung weist eine Lichtverteilungseinrichtung, insbesondere einen Lichtleiter und eine Lichterzeugungseinrichtung, auf. Die Lichtverteilungseinrichtung ist zum räumlichen Verteilen des Lichtes eingerichtet. Die Form der Lichtverteilungseinrichtung ist an eine Rückseite des Feldgerätedisplaymoduls angepasst, wobei die Lichtverteilungseinrichtung beleuchtbar ist. Die Lichtverteilungseinrichtung ist eingerichtet, um einfallendes Licht gleichmäßig über das Feldgerätedisplaymodul zu verteilen. Die Lichtverteilungseinrichtung ist mittels der Leuchteinrichtung beleuchtbar.

Gemäß einem weiteren exemplarischen Ausführungsbeispiel der vorliegenden Erfindung wird eine Beleuchtungsanordnung für ein Feldgerätedisplay angegeben. Die Beleuchtungsanordnung umfasst eine Schaltungs-Anordnung mit den oben genannten Merkmalen und eine Leuchteinrichtung. Die Schaltungs-Anordnung ist mit der Displaybeleuchtungsansteuereinrichtung gekoppelt und die Displaybeleuchtungsansteuereinrichtung ist wiederum mit der Leuchteinrichtung, insbesondere mit der Lichterzeugungseinrichtung der Leuchteinrichtung, gekoppelt.

Gemäß einem weiteren exemplarischen Ausführungsbeispiel der vorliegenden Erfindung wird ein Verfahren zum Ansteuern einer Leuchteinrichtung für ein Feldgerätedisplay angegeben, wobei das Verfahren aufweist das Messen einer vorhandenen überschüssigen Leistung, das Bestimmen, ob die vorhandene überschüssige Leistung für die Beleuchtung ausreichend ist und anschließendes Ansteuern der Leuchteinrichtung, insbesondere einer Lichterzeugungseinrichtung einer Leuchteinrichtung, zum Betreiben der Leuchteinrichtung mit der vorhandenen überschüssigen Leistung, wenn bestimmt worden ist, dass die vorhandene überschüssige Leistung für die Beleuchtung ausreichend ist.

Gemäß noch einem weiteren exemplarischen Ausführungsbeispiel der vorliegenden Erfindung wird ein computerlesbares Medium bereitgestellt, in dem ein Computerprogramm zur Ansteuerung einer Leuchteinrichtung für ein Feldgerätedisplay gespeichert ist, das, wenn es von einem Prozessor ausgeführt wird, aufweist Messen einer vorhandenen überschüssige Leistung, danach Bestimmen, ob die vorhandene überschüssige Leistung für die Beleuchtung ausreichend ist und schließlich Ansteuern einer Leuchteinrichtung, insbesondere einer Lichterzeugungseinrichtung, zum Betreiben der Leuchteinrichtung mit der vorhandenen überschüssigen Leistung, wenn bestimmt worden ist, dass die vorhandene überschüssige Leistung für die Beleuchtung ausreichend ist.

Gemäß einem noch anderen exemplarischen Ausführungsbeispiel der vorliegenden Erfindung wird ein Programmelement zur Ansteuerung einer Leuchteinrichtung für ein Feldgerätedisplay angegeben, das, wenn es von einem Prozessor ausgeführt wird, aufweist Messen einer vorhandenen überschüssige Leistung, danach Bestimmen, ob die vorhandene überschüssige Leistung für die Beleuchtung ausreichend ist und schließlich Ansteuern einer Leuchteinrichtung, insbesondere einer Lichterzeugungseinrichtung, zum Betreiben der Leuchteinrichtung mit der vorhandenen überschüssigen Leistung, wenn bestimmt worden ist, dass die vorhandene überschüssige Leistung für die Beleuchtung ausreichend ist.

Gemäß einem exemplarischen Ausführungsbeispiel der vorliegenden Erfindung kann ein energiesparender Betrieb einer Feldgerätedisplaybeleuchtung ermöglicht werden.

Zum Einstellen und zur Weitergabe eines Messwertes an eine Steuerwarte kann eine externe Spannungsquelle eines externen Stromkreises mittels einer Lastanpassung derart in einen Strom gewandelt werden, dass der Strom in der externen Stromschleife einem Messwert entspricht. Bei einem 4 bis 20 mA Messsystem kann ein Messwert eines Feldgerätes, Messgerätes oder Sensors von einer Steuereinrichtung, beispielsweise einem Mikroprozessor, derart angepasst werden, dass der Strom in einem Bereich von 4 bis 20 mA variiert. Dabei könnte beispielsweise bei einer Füllstandsmessung der Stromwert von 4 mA einem niedrigsten Füllstandslevel und der Stromwert von 20 mA einem höchsten Füllstandslevel entsprechen.

Die Variation des Stromes kann, da die externe Spannungsquelle einen konstanten Wert aufweisen kann, mittels der Anpassung von Verbraucherwiderständen erfolgen. Dabei kann gezielt Leistung an einem Widerstand verbraucht werden, um einen dem Füllstandswert entsprechenden Strom zu erzwingen.

Abhängig von dem anzuzeigenden Strom kann somit mehr oder weniger Leistung in einem Feldgerät zur Vernichtung anfallen. Dieser Leistungsüberschuss kann im Feldgerät einerseits dazu verwendet werden, das Feldgerät, insbesondere die in dem Feldgerät befindlichen Elektronikbaugruppen, mit Leistung zu versorgen. Es kann jedoch auch vorkommen, dass mehr als für die Versorgung der internen Funktion benötigte Leistung zur Verfügung steht, die dann künstlich verbraucht werden müsste.

Der bei einem aktuellen Messwert vorhandene Leistungsvorrat kann mittels einer Leistungsmesseinrichtung bestimmt werden und im Falle einer überschüssigen Leistung kann diese Leistung für die Versorgung von Zusatzfunktionen verwendet werden. Dazu kann die überschüssige Leistung mittels einer Leistungsverteilungseinrichtung quantifiziert werden und im Falle eines ausreichenden Überschusses einer Zusatzbaugruppe übergeben werden. Bei einer solchen Zusatzbaugruppe kann es sich um eine Displaybeleuchtung handeln, die die überschüssige Leistung für eine Displaybeleuchtung nutzen kann.

Die überschüssige Leistung kann einer Displaybeleuchtungsansteuereinrichtung zur Verfügung gestellt werden, die ihrerseits feststellen kann, ob die bereitgestellte Leistung für die anzusteuernde Leuchteinrichtung ausreichend ist. Stellt die Displaybeleuchtungsansteuereinrichtung fest, dass ihr von der Leistungsverteilungseinrichtung ausreichend Leistung zur Verfügung gestellt wird, kann sie diese Leistung an eine Leuchteinrichtung weitergeben, wodurch die Leuchteinrichtung die Leistung in Licht wandeln kann und das Display beleuchten kann.

Zur gezielten Beleuchtung des Displays kann die Leuchteinrichtung eine Lichtverteilungseinrichtung, insbesondere einen Lichtleiter, aufweisen, wobei die Form der Lichtverteilungseinrichtung bzw. des Lichtleiters an die Form des Displays angepasst ist. Die Lichtverteilungseinrichtung kann in einer Ableserichtung gesehen hinter dem Feldgerätedisplay angebracht sein und von hinten das Display, insbesondere die Ablesewerte, beleuchten. Dadurch können die dargestellten Werte bzw. Symbole hervortreten. Die an das Feldgerätedisplay angepasste Form kann für eine gleichmäßige Lichtverteilung über das Display sorgen. Die Leuchteinrichtung kann eine Lichterzeugungseinrichtung aufweisen, der beispielsweise elektrischen Strom in Licht wandeln kann. Das von der Lichterzeugungseinrichtung erzeugte Licht kann mittels der Lichtverteilungseinrichtung über das Display verteilt werden.

Die Lichterzeugungseinrichtung kann sich seitlich von der Lichtverteilungseinrichtung befinden. In anderen Worten bedeutet das, dass die Lichterzeugungseinrichtung in einem Winkel, beispielsweise 90°, von einer Blickrichtung auf das Display gesehen angeordnet sein kann. Von dieser seitlichen Position kann die Lichterzeugungseinrichtung Licht in die Lichtverteilungseinrichtung einspeisen. D. h. das Licht kann sich zunächst parallel zu dem Feldgerätedisplay innerhalb der Lichtverteilungseinrichtung verteilen, um dann um 90° gedreht, entgegen der Blickrichtung auf das Display, das Display zu beleuchten. Dazu ist die Lichtverteilungseinrichtung derart eingerichtet, dass sie den Strahlengang des Lichts, vor dem Beleuchten in der Ausbreitungsrichtung dreht.

Um eine Drehung des Lichtes zu vermeiden kann die Lichterzeugungseinrichtung in einer Ableserichtung des Display gesehen hinter dem Display angeordnet sein. Die Lichtverteilungseinrichtung verteilt beim Beleuchten das von hinten eingestrahlte Licht gleichmäßig, so dass eine homogene Ausleuchtung der Anzeige erfolgen kann.

Es ist auch möglich, dass die Lichtverteilungseinrichtung ein Auflicht auf die Vorderseite des Displays erzeugt und dadurch die Ablesung von Symbolen auf dem Display erleichtert.

Im Folgenden werden weitere exemplarische Ausführungsbeispiele der Schaltkreis-Anordnung für ein Feldgerät beschrieben. Diese Ausführungsbeispiele gelten ebenfalls für die Beleuchtungsanordnung für ein Feldgerätedisplay, für das Verfahren zum Ansteuern einer Leuchteinrichtung für ein Feldgerätedisplay, für das computerlesbare Medium, in dem das Computerprogramm zum Ansteuern einer Leuchteinrichtung für ein Feldgerätedisplay gespeichert ist und für das Programmelement zum Ansteuern einer Leuchteinrichtung für das Feldgerätedisplay.

Gemäß einem weiteren Ausführungsbeispiel der vorliegenden Erfindung ist die Schaltkreis-Anordnung eingerichtet eine für das Feldgerät überschüssige Leistung weiterzuleiten. Diese überschüssige Leistung kann aus der Leistungsversorgung eines HART® 2-Leiterfeldgerät, eines HART® 4-Leiterfeldgerät, einem 4 bis 20 mA Feldgerät, einem Profibus-Feldgerät oder einem Fieldbusfoundation-Feldgerät stammen. Die Leistung kann dabei über die Messwertsignalleitung bezogen werden. Somit kann vermieden werden, dass eine zusätzliche Leitung für eine Feldgerätedisplayversorgung bereitzustellen ist. Es kann die Anzahl der Leitungen zu dem Feldgerät reduziert werden, wodurch Leitungen eingespart werden können. Übliche Leitungslängen für Feldgerätezuleitungen können im Bereich von 10 m bis 100 m, 100 m bis 800 m oder beispielsweise 500 m bis 3000 m aufweisen können.

Gemäß einem weiteren exemplarischen Ausführungsbeispiel der vorliegenden Erfindung wird eine Schaltkreis-Anordnung bereitgestellt, wobei die Leistungsverteilungseinrichtung eine Ex-Schutzeinrichtung aufweist. Diese Ex-Schutzeinrichtung kann in der Verwendung von Widerständen zur Strombegrenzung liegen. Der Einbau einer Ex-Schutzeinrichtung erlaubt es, die Schaltkreis-Anordnung in einem Ex-Bereich einzusetzen. Ein Ex-Bereich ist ein örtlicher Bereich, in dessen Einzugsgebiet besondere Vorkehrungen zu treffen sind, um Explosionen zu vermeiden. Ex-Bereiche sind in verschiedene Schutzklassen eingeteilt und mittels der Verwendung von Widerständen kann die Schaltkreis-Anordnung derart angepasst werden, dass sie zur Verwendung in einem Ex-Bereich eingerichtet ist.

Gemäß noch einem weiteren exemplarischen Ausführungsbeispiel der vorliegenden Erfindung wird eine Schaltkreis-Anordnung angegeben, wobei die Leistungsverteilungseinrichtung weiter eingerichtet ist, die Displaybeleuchtungsansteuereinrichtung zu aktivieren.

Es kann folglich eine Kommunikation zwischen der Displaybeleuchtungsansteuereinrichtung und der Schaltkreis-Anordnung stattfinden und somit das Vorhandensein einer ausreichenden Leistung direkt an die Displaybeleuchtungsansteuereinrichtung weitergegeben werden.

Gemäß einem weiteren exemplarischen Ausführungsbeispiel der vorliegenden Erfindung wird eine Schaltkreis-Anordnung bereitgestellt, die eine Displaybeleuchtungsansteuereinrichtung aufweist. Die Displaybeleuchtungsansteuereinrichtung bestimmt, ob eine vorhandene oder bereitgestellte oder vorhandene überschüssige Leistung für die Beleuchtung ausreichend ist und steuert eine Leuchteinrichtung an, wenn ausreichend viel Leistung vorhanden ist.

So kann ermittelt werden, ob ausreichend Leistung vorhanden ist um die Leuchteinrichtung zu betreiben. Sollten andere Funktionen mit einer höheren Priorität vorhanden sein, kann verhindert werden, dass aufgrund der Displaybeleuchtung eine Funktionen mit einer höheren Priorität ausfällt. Wenn nicht ausreichend viel Leistung vorhanden ist, kann es zu Ausfällen von unterversorgten Funktionen kommen.

Gemäß einem weiteren exemplarischen Ausführungsbeispiel weist die Displaybeleuchtungsansteuereinrichtung weiter eine Konstantstromquelle und/oder eine PWM-Ansteuereinrichtung (Pulsweiten Modulation) auf.

Mittels der Konstantstromquelle kann eine gleichmäßige Beleuchtung des Displays erreicht werden. Ein Flackern durch eine wechselnde Leistungsversorgung kann somit im Wesentlichen vermieden werden. Mittels einer sog. Step Up-Einrichtung kann beispielsweise die Spannung für eine Leuchteinrichtung erhöht werden, um ein Flackern der Beleuchtung zu vermeiden.

Gemäß einem weiteren exemplarischen Ausführungsbeispiel der vorliegenden Erfindung weist die Displaybeleuchtungsansteuereinrichtung weiter eine Beleuchtungswahleinrichtung auf, wobei die Beleuchtungswahleinrichtung zum Erkennen ob eine Beleuchtung erfolgen soll, eingerichtet ist. Es kann sich dabei um einen Schalter handeln, der es einem Anwender erlaubt, die Displaybeleuchtungsansteuereinrichtung zu beleuchten.

Die Displaybeleuchtungsansteuereinrichtung ist weiter derart eingerichtet, so dass sie die Leuchteinrichtung nur ansteuert, wenn ausreichend Leistung vorhanden ist und wenn sie mittels der Beleuchtungswahleinrichtung erkennt, dass eine Anzeige erfolgen soll.

Mittels der Beleuchtungswahleinrichtung kann eine Displaybeleuchtung nur dann eingeschalten werden, wenn das Display abgelesen werden soll. In der übrigen Zeit kann die Leistung entweder zwischengespeichert werden oder anderen Zusatzkomponenten zur Verfügung gestellt werden.

Gemäß noch einem weiteren exemplarischen Ausführungsbeispiel der vorliegenden Erfindung wird eine Schaltkreis-Anordnung angegeben, wobei die Displaybeleuchtungsansteuereinrichtung zusätzlich einen Leistungsspeicher umfasst. Der Leistungsspeicher ist derart eingerichtet, dass überschüssige Leistung oder Energie gespeichert wird.

Bei dem Leistungsspeicher kann es sich beispielsweise um einen Kondensator mit einer großen Kapazität, beispielsweise 1000 µF, mit einer Kapazität aus dem Bereich von 100 µF bis 500 µF oder aus dem Bereich von 1 µF bis 100 µF, handeln. Dieser Kondensator kann wie ein Akkumulator verwendet werden und kann während einer Zeit, in der eine überschüssige Leistung vorhanden ist, aufgeladen werden, um die zunächst überschüssige Leistung zu speichern und zu einem späteren Zeitpunkt zur Verfügung zu stellen. Wenn ein hoher Messwert auf der Messleitung übertragen wird, kann von dem Feldgerät ein hoher Leistungsverbrauch gefordert werden, um die Leistung zu vernichten. Statt die Leistung zu vernichten kann die Leistung in der Leistungsspeichereinrichtung zugeführt werden.

Auch die Zeit, in der mittels der Beleuchtungswahleinrichtung das Display, insbesondere die Displaybeleuchtung ausgeschalten ist, kann genutzt werden, um überschüssige Leistung zu speichern und zu einem späteren Zeitpunkt abzurufen.

Gemäß einem noch anderen exemplarischen Ausführungsbeispiel der vorliegenden Erfindung wird eine Schaltkreis-Anordnung angegeben, wobei die Displaybeleuchtungsansteuereinrichtung, eine Ex-Schutzeinrichtung aufweist. Mittels der Ex-Schutzeinrichtung, beispielsweise mittels Widerständen, kann die Displaybeleuchtungsansteuereinrichtung an Ex-Schutzanforderungen angepasst werden.

Im Folgenden werden weitere exemplarische Ausführungsbeispiele der Leuchteinrichtung angegeben. Diese Ausführungsbeispiele sollen auch für die Beleuchtungsanordnung gelten.

Gemäß einem anderen exemplarischen Ausführungsbeispiel der vorliegenden Erfindung ist die Leuchteinrichtung zum Einsatz mit einem abnehmbaren Feldgerätedisplaymodul eingerichtet. Beispielsweise kann die Leuchteinrichtung mit dem Displaymodul von einem Feldgerätegehäuse abgenommen werden.

Gemäß einem weitern Ausführungsbeispiel der vorliegenden Erfindung ist die Leuchteinrichtung zum Betrieb mit einem Feldgerät ausgewählt aus der Gruppe bestehend aus einem Radar-Feldgerät, einem TDR-Feldgerät, einem Ultraschall-Feldgerät, einem Kapazitiv-Feldgerät und einem Grenzstand-Feldgerät eingerichtet.

Ein Kapazitiv-Feldgerät kann Messwerte über die Bestimmung einer bei einer Messung veränderten Kapazität ermitteln. Ein TDR-Feldgerät (Time Domain Reflectometry) ermittelt Messwerte mit der Hilfe von Reflexionen. Dabei kann es sich um ein Verfahren zur Ermittlung und Analyse von Lauflängen und Reflektionscharakteristika von elektromagnetischen Wellen und Signalen handeln.

Gemäß einem weiteren Ausführungsbeispiel der vorliegenden Erfindung weist die Lichtverteilungseinrichtung eine Haltevorrichtung für das Feldgerätedisplaymodul auf. Mittels der Haltevorrichtung kann das Displaymodul auf der Leuchteinrichtung, insbesondere der Lichtverteilungseinrichtung, positioniert werden und in einer bestimmten Position gehalten werden. Dadurch kann eine gleichmäßige Lichtverteilung über die Fläche des Displaymoduls erzielt werden. Außerdem kann ein Verrutschen des Displaymoduls gegenüber der Lichtverteilungseinrichtung verhindert werden.

Ein Feldgerätedisplay, welches auch abnehmbar sein kann, kann mehrere Bauteile aufweisen. Beispielsweise kann ein Feldgerätedisplay ein Feldgerätedisplaygehäuse, eine Ansteuerplatine und ein Feldgerätedisplaymodul umfassen. Die Ansteuerplatine bereitet Signale derart auf, dass die gewünschten Informationen auf dem Feldgerätedisplay erscheinen. Dazu steuert die Ansteuerplatine beispielsweise einzelne Bildpunkte des Displaymoduls an. Mittels einer Halteeinrichtung kann ein Verrutschen der Bauteile gegeneinander vermieden werden.

Bei einem Feldgerätedisplay kann es sich um ein Matrixdisplaymodul, ein TFT-Display, ein Graustufen-Display, ein farbiges Display, ein OLED, ein PLED oder ein LCD-Displaymodul handeln. Die Begriffe Feldgerätedisplaymodul, Displaymodul, LCD Display, LED-Displaymodul oder LC-Displaymodul gleichberechtigt benutzt.

Gemäß einem weiteren exemplarischen Ausfiihrungsbeispiel der vorliegenden Erfindung wird eine Leuchteinrichtung angegeben, bei der die Lichtverteilungseinrichtung in einer Blickrichtung auf das Displaymodul gesehen, hinter dem Displaymodul anbringbar ist. Das Anbringen kann beispielsweise mittels Aufkleben erfolgen. Durch das Aufkleben kann der Halt der Lichtverteilungseinrichtung auf oder hinter dem Display verrutschsicher sichergestellt werden.

Gemäß noch einem weiteren exemplarischen Ausführungsbeispiel der vorliegenden Erfindung wird eine Leuchteinrichtung mit einer Lichtverteilungseinrichtung angegeben, wobei die Lichtverteilungseinrichtung mit Prismen besetzt ist. Mittels der Prismen, die wie Linsen wirken, kann das Licht, das auf das Displaymodul verteilt wird, auf bestimmte Bereiche konzentriert werden. Dadurch kann ein deutlicheres Ablesen der Anzeige des Displaymoduls erreicht werden.

Gemäß einem weiteren Ausführungsbeispiel der vorliegenden Erfindung wird eine Leuchteinrichtung angegeben, wobei die Lichterzeugungseinrichtung eine LED (Light Emitting Diode) ist. Bei einer LED kann es sich um ein Bauteil zur elektrooptischen Wandlung handeln, bei dem ein Strom in ein Lichtsignal einer bestimmten Wellenlänge gewandelt wird. Eine LED kann eine geringe Leistungsaufnahme aber eine hohe Lichtausbeute aufweisen. Es kann auch eine Mehrzahl von LEDs eingesetzt werden. Dabei kann die mögliche Anzahl an verwendbaren LEDs von der von jeder einzelnen LED benötigten Leistung abhängen. Es kann beispielsweise ein LED Array gebildet werden.

Gemäß noch einem weiteren Ausführungsbeispiel der vorliegenden Erfindung ist die LED derart eingerichtet, weißes Licht bereitzustellen. Weißes Licht kann sämtliche Spektralfarben enthalten und kann deshalb ein gutes Ablesen eines Displays, insbesondere eines farbigen bzw. farbig darstellenden Displays, ermöglichen. Eine weiße LED kann eine Helligkeitsklasse aufweisen, die sich von minimal 360 mcd bis max. 1000 mcd (mcd = Millicandela) bei 20 mA erstreckt. Eine weiße LED kann auch der Klasse T entstammen, wobei sich die Helligkeitsklasse T von 720 mcd bis 1000 mcd erstreckt. Eine ausreichende Helligkeit kann auch mittels einer LED der Helligkeitsklasse S im Bereich von 500 mcd bis 720 mcd erreicht werden. Es sind auch LEDs der Klasse R von 360 mcd bis 500 mcd einsetzbar. Aber auch LEDs mit einer Leuchtkraft von über 1000 mcd können eingesetzt werden.

Gemäß noch einem weiteren Ausführungsbeispiel der vorliegenden Erfindung ist die Lichtverteilungseinrichtung eine halbreflektierende Folie. Mit einer halbreflektierenden Folie wird einfallendes Licht derart umgelenkt, dass es zur Hintergrundbeleuchtung des Displays dienen kann.

Im Folgenden wird ein exemplarischer Aspekt der vorliegenden Erfindung detaillierter beschrieben.

Bei der vorliegenden Erfindung kann es sich um einen Erweiterungsbausatz für ein Feldgerät, insbesondere für ein Feldgerätedisplay bzw. Displaymodul eines Feldgeräts, handeln. Dazu kann eine einzige weiße LED das Display beleuchten. Die LED kann seitlich in einen Lichtleiter einstrahlen, wobei der Lichtleiter das Licht gleichmäßig über das Display verteilt. Der Lichtleiter kann zu einer ausreichenden Lichtverteilung eine Dicke von ca. 2 mm aufweisen. Die Dicke kann jedoch auch im Bereich von 2 mm bis 8 mm liegen.

Das LCD-Display kann an einer Trägerplatine festgelötet sein. Dadurch kann Platz für die zusätzliche Lichtverteilungseinrichtung geschaffen werden. Das Verfahren zum Betrieb des Displays kann derart angepasst werden, so dass die Leuchteinrichtung abgeschalten werden kann.

Auch das Verfahren zum Betrieb eines vorhandenen Feldgeräts, Messgeräts oder Sensors kann angepasst werden, um den Betrieb der Beleuchtung einzuführen. Der Sensor kann die ihm zur Verfügung stehende Leistung bestimmen und daraus bestimmen, ob die Displaybeleuchtung, insbesondere die Leuchteinrichtung, ein- oder ausgeschalten wird. Die Bestimmung, ob genügend Leistung vorhanden ist, kann mittels der Messung einer Versorgungsspannung erfolgen. Durch den erhöhten Stromverbrauch kann es an Ex-Widerständen zwischen einem Sensor und einem Feldgerätedisplay kommen. An den Ex-Widerständen können beispielsweise 0,25 V abfallen.

Das Feldgerätedisplay kann einen 4-Fach-Spannungsvervielfacher aufweisen, der beispielsweise aus einer Spannung von 3 V eine Spannung von 12 V macht. Die Leuchteinrichtung kann mit Hilfe einer Konstantstromquelle und/oder mit einer PWM-Ansteuerung betrieben werden. Ein Strom durch die Leuchteinrichtung, insbesondere die Lichterzeugungseinrichtung und weiter insbesondere durch die LED kann im Bereich von 1 mA bis 1,5 mA liegen. Die Leistungsaufnahme einer Beleuchtungsanordnung kann 5 mW betragen. Durch die Abfuhr von Leistung kann einem Prozessor des Feldgeräts weniger Energie zur Verfügung stehen, wodurch die Durchlaufzeit oder Signalverarbeitungszeit reduziert werden kann.

Das Ein- und Ausschalten einer Beleuchtung kann erfolgen, indem die Beleuchtung beim Einschalten des Sensors immer aus ist, egal ob die Beleuchtung aktiviert oder deaktiviert ist. Die Leistungsmessung kann erst im Hauptprogramm und nicht in den Bootteilen erfolgen. Erst nach einer erfolgten Leistungsmessung und ausreichend Leistung kann die Beleuchtung aktiviert werden. Die Beleuchtung kann von einem Anwender über eine Eingabevorrichtung des Displays oder ein entferntes Bedienterminal aktiviert und deaktiviert werden.

In einem Auslieferzustand der Displaybeleuchtung kann die Beleuchtung entweder aktiviert oder deaktiviert sein. Wenn die Leistungsmessung eine zu geringe Leistung feststellt, kann die Beleuchtung deaktiviert werden. Ist dann wieder ausreichend Leistung verfügbar, kann die Beleuchtung wieder aktiviert werden. Wenn ein Anwender versucht, die Beleuchtung zu aktivieren und diese vorher durch die Leistungsmessung deaktiviert wurde, kann ein Warnhinweis eingeblendet werden.

In einem Low-Power-Mode kann eine Notbeleuchtung erfolgen.

### Kurze Beschreibung der Zeichnungen

Im Folgenden werden vorteilhafte Ausführungsbeispiele der vorliegenden Erfindung mit Verweis auf die Figuren beschrieben:
Fig. 1 zeigt ein Blockschaltbild einer Beleuchtungsanordnung für ein Feldgerät gemäß einem exemplarischen Ausführungsbeispiel der vorliegenden Erfindung.
Fig. 2 zeigt ein vereinfachtes Blockschaltbild für ein Feldgerät mit einer Beleuchtungsanordnung für ein Feldgerätedisplay gemäß einem exemplarischen Ausführungsbeispiel der vorliegenden Erfindung.
Fig. 3 zeigt eine Rückansicht eines Feldgerätedisplays mit einer Leuchteinrichtung in einem ausgeklappten Zustand gemäß einem exemplarischen Ausführungsbeispiel der vorliegenden Erfindung.
Fig. 4 zeigt eine Schnittdarstellung eines Messgeräts mit Display und Zusatzmodul für eine Beleuchtungsanordnung für ein Feldgerätedisplay gemäß einem exemplarischen Ausführungsbeispiel der vorliegenden Erfindung in einem zerlegten Zustand.
Fig. 5 zeigt eine perspektivische Darstellung eines Displayträgers mit einer Lichtverteilungseinrichtung gemäß einem exemplarischen Ausführungsbeispiel der vorliegenden Erfindung.
Fig. 6 zeigt eine perspektivische Darstellung eines Displayträgers mit einer Lichtverteilungseinrichtung und einem Feldgerätedisplay gemäß einem exemplarischen Ausführungsbeispiel der vorliegenden Erfindung.
Fig. 7 zeigt eine weitere perspektivische Darstellung eines Displayträgers mit einer Lichtverteilungseinrichtung und einem Displaymodul gemäß einem exemplarischen Ausführungsbeispiel der vorliegenden Erfindung.
Fig. 8 zeigt eine weitere perspektivische Darstellung eines Displayträgers mit einer Lichtverteilungseinrichtung und einem Displaymodul gemäß einem exemplarischen Ausführungsbeispiel der vorliegenden Erfindung.
Fig. 9 zeigt ein Blockschaltbild einer Schaltkreis-Anordnung für ein Feldgerät gemäß einem exemplarischen Ausführungsbeispiel der vorliegenden Erfindung.
Fig. 10 zeigt eine Schnittdarstellung durch ein Feldgerätedisplay mit einer Lichtverteilungseinrichtung und einem Displaygehäuse gemäß einem exemplarischen Ausführungsbeispiel der vorliegenden Erfindung.
Fig. 11 zeigt eine Schnittdarstellung durch ein Feldgerätedisplay mit einer Lichtverteilungseinrichtung und einer Heizeinrichtung gemäß einem exemplarischen Ausführungsbeispiel der vorliegenden Erfindung.
Fig. 12 zeigt ein Flussdiagramm eines Verfahrens zum Beleuchten eines Feldgerätedisplays gemäß einem exemplarischen Ausführungsbeispiel der vorliegenden Erfindung.
Fig. 13 zeigt ein Zustandsdiagramm für ein Verfahren zum Beleuchten eines Feldgerätedisplays gemäß einem exemplarischen Ausführungsbeispiel der vorliegenden Erfindung.

### Detaillierte Beschreibung von exemplarischen Ausführungsformen

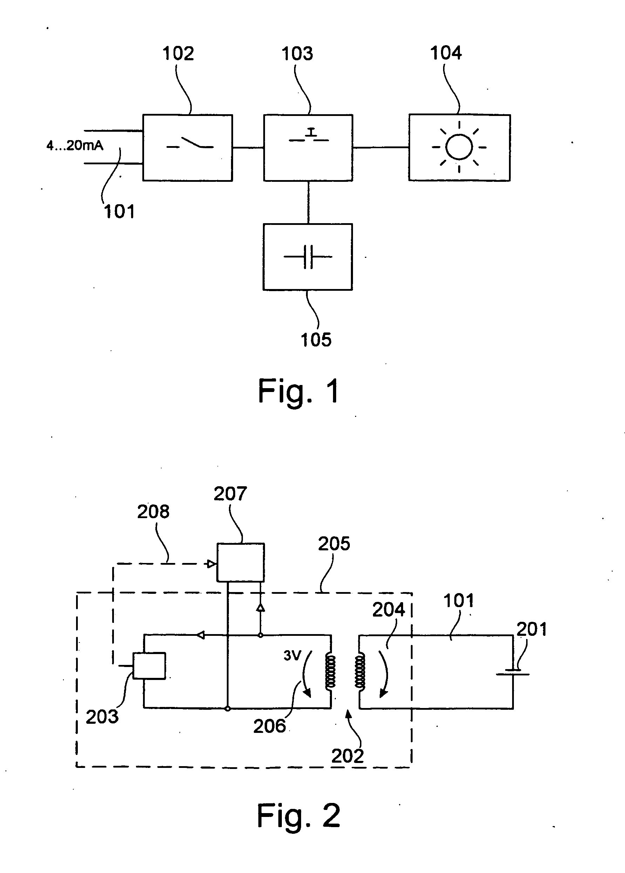

Die Darstellungen in den Figuren sind schematisch und nicht maßstäblich. In der folgenden Beschreibung der Fig. 1 bis Fig. 13 werden die gleichen Bezugsziffern für gleiche oder sich entsprechende Elemente verwendet.

Fig. 1 zeigt ein Blockschaltbild einer Beleuchtungsanordnung für ein Feldgerät gemäß einem exemplarischen Ausführungsbeispiel der vorliegenden Erfindung. Über den Messbus 101 wird ein Strom entsprechend einem anzuzeigenden Messwert einem Messgerät, das in Fig. 1 nicht gezeichnet ist, zur Verfügung gestellt. Die Blöcke 102, 103, 104 und 105 symbolisieren ein Erweiterungs- oder Zusatzmodul für das Messgerät zur Beleuchtung eines Displays des Messgerätes oder Feldmessgerätes.

Im Folgenden soll auf die Funktion der einzelnen Blöcke eingegangen werden. Mit der Bezugsziffer 102 ist eine Feldgeräteleistungsbestimmungseinrichtung gekennzeichnet. Diese Feldgeräteleistungsbestimmungseinrichtung überwacht die über den Messbus bzw. Sekundäre-Kontrollschleife 101 zur Verfügung stehende Leistung. Wenn die Feldgeräteleistungsbestimmungseinrichtung 102 feststellt, dass über die Messschleife 101 zusätzliche Leistung bereitgestellt wird, die nicht für die Versorgung des Feldgeräts benötigt wird. Und wenn die Leistung für den Betrieb einer Displaybeleuchtungseinrichtung 104 bzw. einer Leuchteinrichtung 104 verfügbar ist, leitet die Feldgeräteleistungsbestimmungseinrichtung 102 die überschüssige Leistung an die Displaybeleuchtungsansteuerschaltung 103 weiter. Die Displaybeleuchtungsansteuereinrichtung 103 kann die ihr zur Verfügung gestellte Leistung messen und feststellen, ob die Leistung zur Versorgung der Leuchteinrichtung 104 ausreichend ist. Die Displaybeleuchtungsansteuereinrichtung 103 kann aber auch über ein Signal einer Leistungsverteilungseinrichtung in der Feldgeräteleistungsbestimmungseinrichtung 102, Information über die Höhe der Leistung erhalten.

Die Displaybeleuchtungsansteuereinrichtung 103 kann feststellen, ob ein Feldgerätedisplay beleuchtet werden soll. Diese Feststellung kann mittels einer Eingabe von einem Anwender erfolgen. Sollte ausreichend Leistung für den Betrieb der Displaybeleuchtung 104 oder die Beleuchtungseinrichtung 104 vorhanden sein und eine Displaybeleuchtung gewünscht sein, so kann die Displaybeleuchtungsansteuereinrichtung 103 die Leuchteinrichtung 104 aktivieren.

Auch wenn nicht ausreichend Leistung von der Feldgeräteleistungsbestimmungseinrichtung 102 bereitgestellt wird, kann die Displaybeleuchtungsansteuereinrichtung 103 eine benötigte Leistung für die Leuchteinrichtung 104 einem Leistungsspeicher 105 entnehmen. Dazu entscheidet die Displaybeleuchtungsansteuereinrichtung 103 ebenfalls mittels Messung, ob in dem Leistungsspeicher 105 ausreichend Leistung bzw. Energie vorhanden ist.

Sollte ausreichend Leistung von der Feldgeräteleistungsbestimmungseinrichtung 102 zur Verfügung gestellt werden, aber momentan keine Anzeige bzw. Beleuchtung eines Displays gefordert sein, kann die Displaybeleuchtungsansteuereinrichtung 103 die überschüssige Leistung an den Leistungsspeicher 105 abführen und so für einen späteren Zeitpunkt speichern. Durch das Messen der vorhandenen Leistung und dem Bestimmen, ob die Leistung momentan benötigt wird bzw. in einen Leistungsspeicher 105 einzustellen ist, ist es der Displaybeleuchtungsansteuereinrichtung 103 möglich, ein Leistungs- oder Energiemanagement durchzuführen.

Fig. 2 zeigt ein vereinfachtes Blockschaltbild für ein Feldgerät mit einer Beleuchtungsanordnung für ein Feldgerätedisplay gemäß einem exemplarischen Ausführungsbeispiel der vorliegenden Erfindung. Die Fig. 2 zeigt den Messbus 101, der als 4 bis 20 mA 2-Draht HART® Bus ausgeführt ist. Die Leistungsversorgung 201, Spannungsversorgung 201 oder Stromversorgung 201 stellt eine Spannung, beispielsweise 20 V zur Verfügung. Der Mikroprozessor 203 regelt dabei über die Messstromanpassungseinrichtung 202 den netzseitigen Spannungsabfall 204 bzw. den busseitigen Spannungsabfall 204 derart, dass der Strom in der Messschleife 101 einem von dem Messgerät 205 bzw. Feldgerät 205 oder Sensor 205 gemessenen Messwert entspricht.

In der Messstromanpassungseinrichtung 202 findet zur Stromanpassung eine Leistungsvemichtung statt. Die Messstromanpassungseinrichtung 202 weist einen Übertrager auf. Mittels Wechselrichtung des Gleichstroms in der Messschleife 101 kann der Strom über den Übertrager der Messstromanpassungseinrichtung 202 übertragen werden. Auf der Feldgeräteseite der Messstromanpassungseinrichtung 202 wird eine konstante Spannung von 3 V 206 aufrechterhalten. Durch das Zuschalten von zusätzlichen Verbrauchern wird überschüssige Leistung vernichtet.

Der Mikroprozessor 203 kann die überschüssig zur Verfügung stehende Leistung bestimmen und die Displaybeleuchtungsansteuereinrichtung 207 über die Ansteuerleitung 208 ansteuern und somit über die zuviel vorhandene Leistung informieren. Die Displaybeleuchtungsansteuereinrichtung 207 kann ihrerseits die überschüssige Leistung bestimmen und für die Ansteuerung einer in Fig. 2 nicht gezeigten Displaybeleuchtung verwenden.

Die Länge der Messbusschleife 101 kann bis zu 4 km betragen. Bei einem digitalen HART® Pollingmode werden in der Messschleife 101 konstant 4 mA bereitgestellt. Von der Wahl der Höhe der Spannungsquelle 201 ist die überschüssige Leistung abhängig. Für einen HART® Bus beträgt die Mindestspannung der Spannungsversorgung 201 15 V, für einen Profibus beträgt die Mindestspannung 10 V.

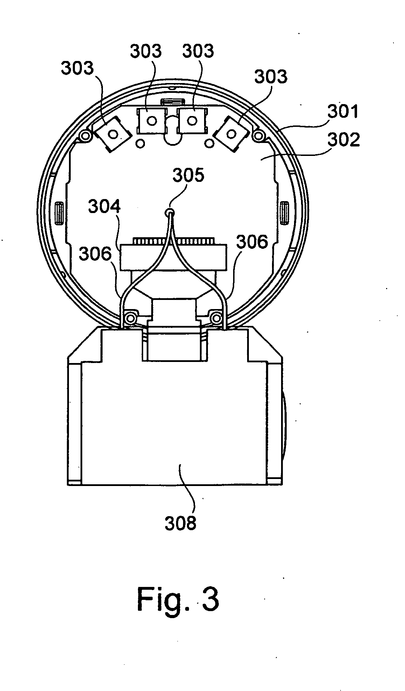

Fig. 3 zeigt eine Rückansicht eines Displays mit einer Leuchteinrichtung in einem aufgeklappten Zustand gemäß einem exemplarischen Ausführungsbeispiel der vorliegenden Erfindung. Das Gehäuse 301 des Feldgerätedisplays weist eine runde Form auf. Die Displayplatine 302 ist an die runde Form des Displaygehäuses 301 angepasst und weist die vier Eingabeeinrichtungen 303 für die Eingabe von Anwenderinformationen auf.

Außerdem weist die Platine 302 einen Anschlussstecker 304 auf, mit dem das Displaymodul, beispielsweise ein LCD-Display, an der Platine 302 angeschlossen ist.

Die Lichterzeugungseinrichtung beleuchtet seitlich die Lichtverteilungseinrichtung 308. Die Lichtverteilungseinrichtung verteilt das Licht der Lichterzeugungseinrichtung auf die Unterseite des LCD-Displays, das ebenfalls in Fig. 3 nicht gezeichnet ist. Die Lichtverteilungseinrichtung 308 kommt somit zwischen der Platine der Ansteuerplatine 302 und dem LCD-Display zu liegen.

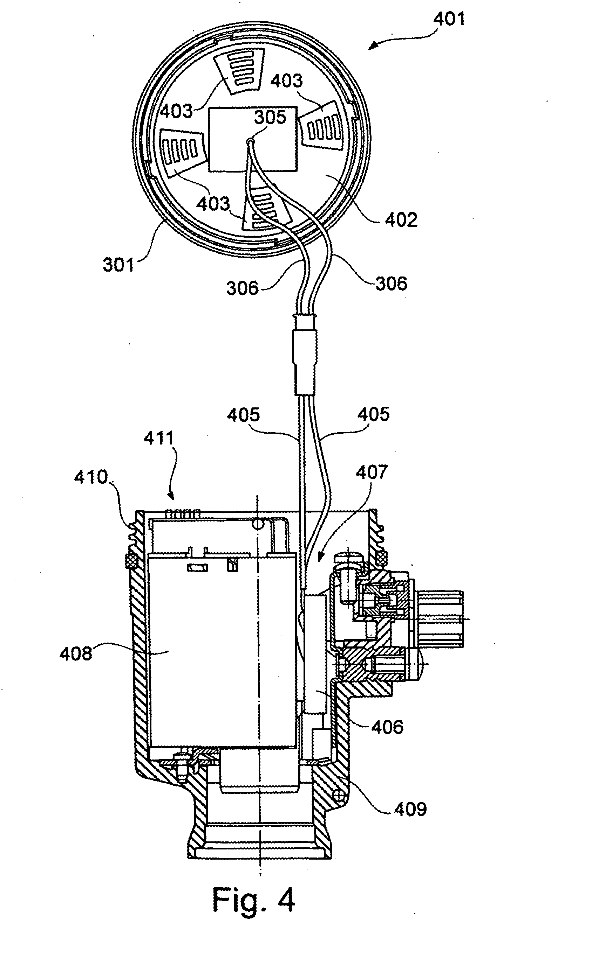

Fig. 4 zeigt ein Messgerät mit einem Display und einem Zusatzmodul für eine Beleuchtungsanordnung gemäß einem exemplarischen Ausführungsbeispiel der vorliegenden Erfindung in einem zerlegten Zustand. Es ist das Feldgerätedisplay 401 in einer Rückansicht mit eingebauter Leuchteinrichtung (in Fig. 4 nicht zu sehen) gezeigt. Das Feldgerätedisplay 401 weist das Gehäuse 301 auf und der rückwärtige Abschluss 402 des Displays 401 weist die Signalanschlüsse 403 auf. Die Signalanschlüsse 403 können die Federkontakte 411 kontaktieren. Die Leistung für die Beleuchtung, insbesondere für die Leuchteinrichtung, wird wie die Signale für das Display über die in Fig. 4 zu sehenden Kontakte 403 gewonnen.

Die Feldgeräteleistungsbestimmungseinrichtung und die Displaybeleuchtungsansteuereinrichtung sind im Elektronikeinsatz 408 untergebracht.

In dem Messgeräteeinsatz 408 sind die sensortypischen Funktionen realisiert. Die Displaybeleuchtung stellt eine Zusatzfunktion dar, die in dem zusätzlichen Modul 406 untergebracht werden kann. Das Zusatzmodul 406 ist über nicht gezeichnete Anschlussleitungen mit dem Elektronikeinsatz 408 verbunden, wodurch beispielsweise eine Kommunikation zwischen der Displaybeleuchtungsansteuereinrichtung 207 und Mikroprozessor 203 stattfinden kann.

Das Feldgerätedisplay 401 kann mittels eines Bayonett-Verschlusses auf den Elektronikeinsatz 408 aufgeschnappt werden, so dass die Kontaktflächen 403 mit den Federkontakten 411 in Verbindung treten. Dadurch kann eine Informationsübertragung, beispielsweise über eine darzustellende Information, zwischen dem Elektronikeinsatz 408 und dem Display 401 erfolgen.

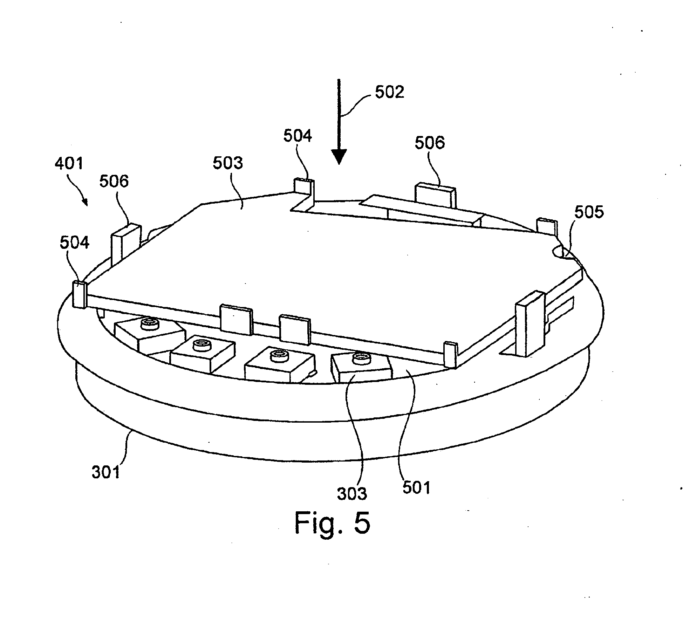

Fig. 5 zeigt eine perspektivische Darstellung eines Displayträgers mit einer Lichtverteilungseinrichtung gemäß einem exemplarischen Ausführungsbeispiel der vorliegenden Erfindung. Die Fig. 5 zeigt einen Teil des Displays 401. Innerhalb des Displaygehäuses 301 ist die Platine 501 zur Aufbereitung der Displayinformationen angeordnet. Die Lichtverteilungseinrichtung 503 ist als Displayträger eingerichtet. Dabei ist die Lichtverteilungseinrichtung als flächiger Lichtleiter ausgebildet. Auf der Platine 501 sind die vier Eingabeelemente 303 angeordnet.

Die Gehäuseaufnahmen 506 dienen der Befestigung der Lichtverteilungseinrichtung 503 und des nicht gezeichneten LCD Displays bzw. Anzeigemoduls. Eine Ablesung des Displays erfolgt in der Displayableserichtung 502. In Ableserichtung 502 gesehen oberhalb von der Platine 501 ist die Lichtverteilungseinrichtung 503 dargestellt. Die Lichtverteilungseinrichtung weist in paralleler Richtung zu der Ableserichtung 502 weisende Aufnahmen 504 auf. Diese Aufnahmen 504 sind eingerichtet, um ein LCD-Display aufzunehmen. Statt einem LCD-Display kann jede andere Art eines Displaymoduls verwendet werden, das ausgebildet ist, elektrische Signale in darstellbare Symbole zu wandeln. Die Ansteuerung des Displaymoduls erfolgt über die Platine 501.

Die Lichtverteilungseinrichtung 503 weist an einer Seite die Einkerbung 505 auf. Die Einkerbung 505 ist angepasst, um eine LED, die seitlich in die Lichtverteilungseinrichtung 503 einleuchtet, aufzunehmen und das von der LED erzeugte Licht in die Lichtverteilungseinrichtung einzukoppeln. Das von der Einkerbung 505 sich in der Lichtverteilungseinrichtung 503 verteilende Licht tritt über die gesamte Fläche der Lichtverteilungseinrichtung 503 verteilt, entgegen der Blickrichtung 502 aus der Lichtverteilungseinrichtung 503 heraus. Dabei durchläuft das Licht das nicht gezeichnete LCD-Display.

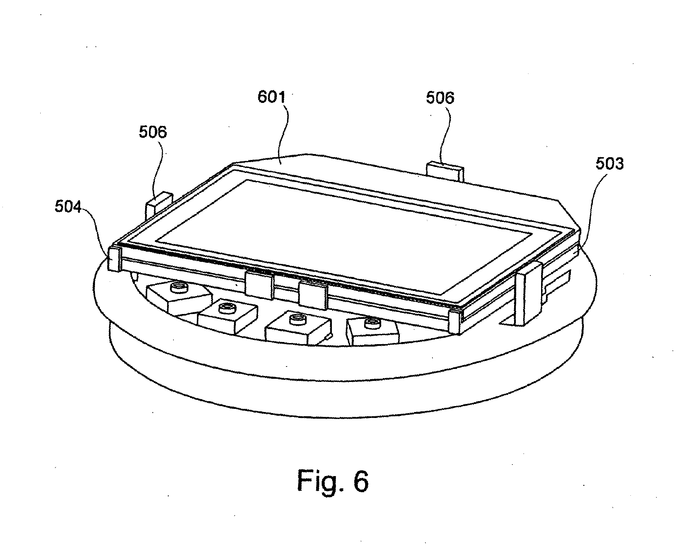

Fig. 6 zeigt eine perspektivische Darstellung eines Displayträgers mit einer Lichtverteilungseinrichtung und einem Displaymodul gemäß einem exemplarischen Ausführungsbeispiel der vorliegenden Erfindung. Fig. 6 entspricht Fig. 5. Es ist im Vergleich zu Fig. 5 jedoch das LCD-Display oder Displaymodul 601 dargestellt. Die Form der Lichtverteilungseinrichtung 503 ist erkennbar an die Form des Displaymoduls 601 angepasst. Die Aufnahmen 504 umfassen das Displaymodul 601 derart, dass ein sicherer Halt des Displaymoduls 601 auf der Lichtverteilungseinrichtung 503 gewährleistet ist. Dadurch kann ein Verrutschen des Displaymoduls 601 auf der Lichtverteilungseinrichtung 503 verhindert werden. Die Aufnahme 504 können auch als Schnapphalter ausgebildet sein.

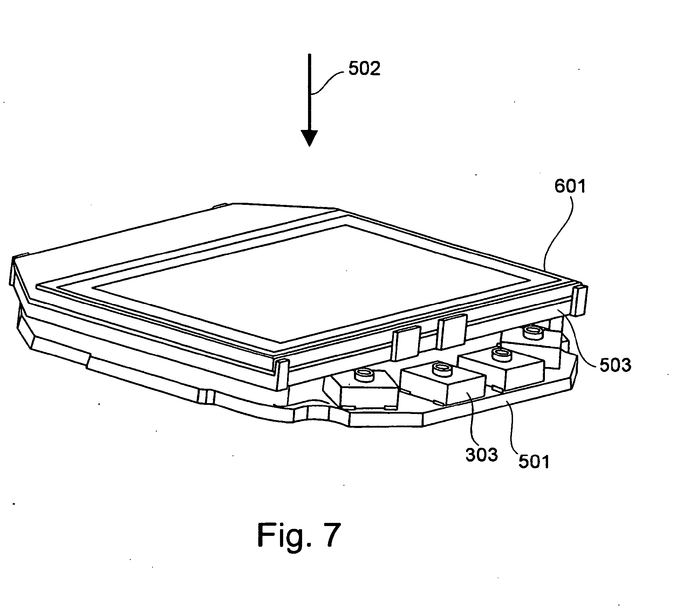

Fig. 7 zeigt eine perspektivische Darstellung eines Displayträgers gemäß einem exemplarischen Ausführungsbeispiel der vorliegenden Erfindung. Zur besseren Darstellung der Komponenten ist in Fig. 7 kein Gehäuse eingezeichnet. Die Fig. 7 zeigt den geschichteten Aufbau der Platine 501 mit den Eingabeeinrichtungen 303, der Lichtverteilungseinrichtung 503 und dem Displaymodul 601. In Blickrichtung 502 betrachtet, befindet sich die Platine 501 unterhalb der Lichtverteilungseinrichtung 503 und die Lichtverteilungseinrichtung 503 unterhalb des Displaymoduls 601. Dadurch kann Licht von der Lichtverteilungseinrichtung 503 das Displaymodul 601 von hinten als Hintergrundbeleuchtung durchleuchten.

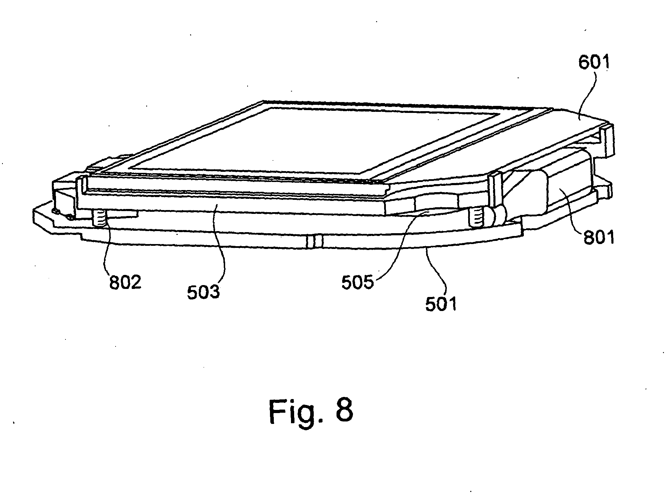

Fig. 8 zeigt eine weitere perspektivische Darstellung eines Displayträgers mit einer Lichtverteilungseinrichtung und einem Displaymodul 601 gemäß einem exemplarischen Ausführungsbeispiel der vorliegenden Erfindung. Fig. 8 zeigt den Flexstecker 801 mit dem Displayinformation von der Ansteuerplatine 501 an das Displaymodul 601 weitergegeben wird. Das Displaymodul 601 kann lediglich Information, die ihm zur Verfügung gestellt wird, darstellen. Die Auswertung und die Art, wie die Information dargestellt wird, erfolgt mittels der Elektronik, die sich auf der Platine 501 befindet. Die Platine 501 ist somit die Ansteuer- oder Treiberschaltung für das Displaymodul 601.

Zwischen dem Displaymodul 601 und der Treiberplatine 501 befindet sich die Lichtverteilungseinrichtung 503. In Fig. 8 ebenfalls zu sehen, ist die Einkerbung 505 zum seitlichen Beleuchten der Lichtverteilungseinrichtung 503. Mittels Abstandshalter 802 wird ein Abstand der Lichtverteilungseinrichtung 503 von der Platine sichergestellt.

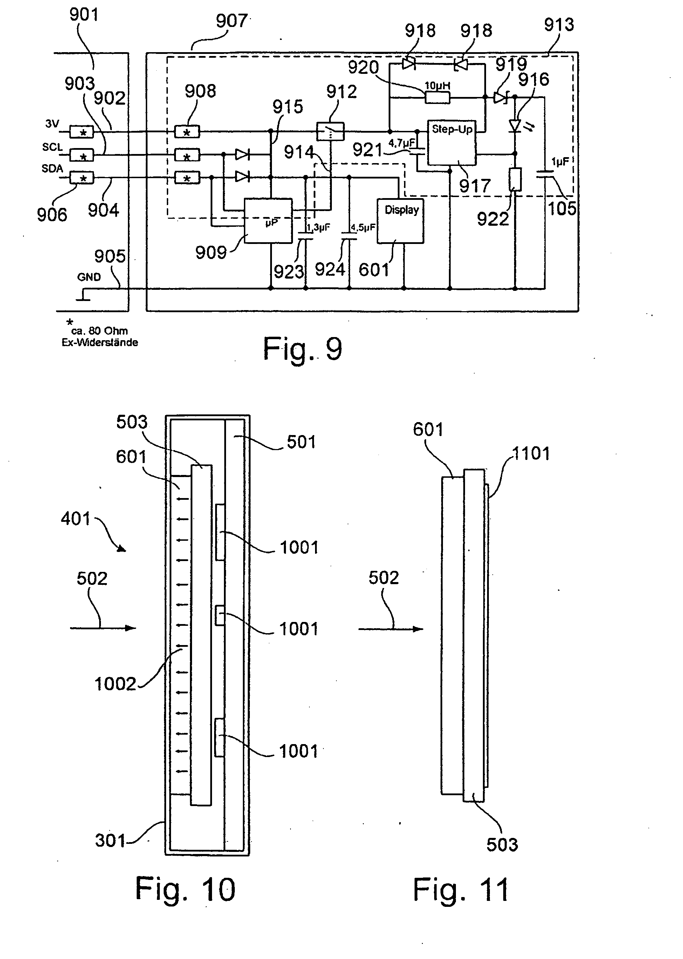

Fig. 9 zeigt ein Blockschaltbild einer Schalkreis-Anordnung für ein Feldgerät gemäß einem exemplarischen Ausführungsbeispiel der vorliegenden Erfindung. Von dem Sensor 901 bzw. Feldgeräte 901 sind lediglich die vier Leitungen 902, 903, 904 und 905 dargestellt. Die Leitungen 902, 903, 904 und 905 bilden die Leitungen eines seriellen Busses. Die Leitung 902 dient der Übertragung der Versorgungsspannung von 3 V, während die Leitung 905 der entsprechende Masseanschluss ist. Die Taktinformation wird über die Leitung SCL (Serial Clock) übertragen. Vorhandene Daten werden über die Leitung 904 SDA (Serial Data) übertragen. Die Leitungen 902, 903 und 904 weisen jeweils einen Ex-Widerstand 906 auf. Dieser Ex-Widerstand ermöglicht den Betrieb der Schaltung in einem Ex-Bereich.

Die Leitungen 902, 903, 904 und 905 führen auf das Feldgerätedisplay 907. Die in dem Block 907 dargestellte Schaltung stellt die Treiberschaltung für das LCD-Displaymodul 601 dar. Die Leitungen 902, 903 und 904 weisen auf der Displaybeleuchtungsansteuereinrichtungsseite 907 ebenfalls Ex-Widerstände.908 auf. Die Leitung 904 überträgt Daten SDA (Serial Data) zu dem Mikroprozessor 909. Der Mikroprozessor 909 erhält neben den Daten über die Leitung 904 auch Taktinformation über die Leitung 903. Außerdem ist der Mikroprozessor 909 mit der 3 V-Gleichspannung der Leitung 902 verbunden.

Der Mikroprozessor 909 stellt die aufbereitete Anzeigeinforrnation für das LCD-Display 601 zur Verfügung. Dazu ist der Mikroprozessor 909 mit dem LCD-Display 601 verbunden, wobei parallel zu dem LCD-Display 601 und dem Mikroprozessor 909, die Kondensatoren 923 und 924 geschalten sind. Beispielsweise beträgt die Kapazität des Kondensators 923 1,3 µF, während die Kapazität des Kondensators 924 4,5 µF beträgt.

Die Versorgungsspannung 902 ist auf einen Schalter 912 gelegt. Der Schalter 912 ist Teil der Displaybeleuchtungsansteuereinrichtung 913. Der Schalter 912 wird über die Leitung 914 von dem Mikroprozessor 909 geschalten. Dadurch kann der Mikroprozessor 909, der ebenfalls über Leitung 915 Zugang zu der aktuellen Versorgungsspannung 902 hat, feststellen, ob ausreichend Leistung für den Betrieb der Lichterzeugungseinrichtung 916 vorhanden ist. Für den Fall, dass ausreichend Leistung vorhanden, schließt der Mikroprozessor den Schalter 912, so dass die Versorgungsspannung 902 auf die Displaybeleuchtungsansteuereinrichtung 913 gelangt. Über die Step Up-Schaltung 917 wird die Spannung von 3 V auf ca. 4,5 V erhöht. Die Zenerdioden 918 und 919 dienen der Begrenzung einer Versorgungsspannung für die Lichterzeugungseinrichtung 916.

Die Spule 920 wird für den Betrieb für die Step Up-Schaltung genutzt..Der Kondensator 921 dient der Entstörung der Schaltung. Die Spule 920 weist eine Induktivität von 10 µH auf, während der Kondensator 921 eine Kapazität von 4,7 µF aufweist. Die Step Up-Schaltung 917 erzielt aufgrund ihrer Spannungserhöhung ein gleichmäßiges Leuchten der Lichterzeugungseinrichtung 916. Der Widerstand 922 ist mit der Kathode LED 916 verbunden und begrenzt den Strom durch die Lichterzeugungseinrichtung 916.

Parallel zu der Lichterzeugungseinrichtung 916, die mit dem Widerstand 922 in Reihe geschalten ist, ist der Leistungsspeicher 105 bzw. Energiespeicher 105 geschalten. Der Leistungsspeicher 105 ist als Kondensator von einer Kapazität von 1 µF realisiert und kann somit Leistungsüberschüsse puffern. Es kann somit auch die Lichterzeugungseinrichtung 916 versorgt werden, wenn über Leitung 902 nicht ausreichend Leistung zur Verfügung gestellt wird.

Durch den erhöhten Stromverbrauch kommt es an den Ex-Widerständen 908, 906 zwischen Sensor 901 und Feldgerätedisplay 907 zu Verlusten. Das Display 907 hat damit keine 3,0 V mehr zur Verfügung, sondern ca. 0,25 V weniger. Da das Display 907 einen Vierfachspannungsvervielfacher 917 oder eine Step Up-Schaltung 917 aufweist, macht Display 907 somit aus 3 V, 12 V. Die Größe der Ex-Widerstände 906 und 908 beträgt 80 Ω.

Fig. 10 zeigt eine Schnittdarstellung durch ein Feldgerätedisplay mit einer Lichtverteilungseinrichtung mit Displaygehäuse gemäß einem exemplarischen Ausführungsbeispiel der vorliegenden Erfindung. Die Ablesung des Feldgerätedisplays 401 erfolgt dabei in Ableserichtung 502. Das Displaymodul 601, insbesondere LCD-Display 601, wird dabei von Licht der Lichtverteilungseinrichtung 503 entgegen der Ableserichtung 502 in der Richtung 1002 durchstrahlt. Die Lichtverteilungseinrichtung 503 befindet sich zwischen dem Displaymodul 601 und der Ansteuerplatine 501. Der Abstand zwischen der Lichtverteilungseinrichtung 503 und der Platine 501 ist so gewählt, dass zwischen der Platine 501 und der Lichtverteilungseinrichtung 503 die Bauelemente 1001 der Platine 501 Platz finden.

Das Displaygehäuse 301 kapselt das Displaymodul 601, die Lichtverteilungseinrichtung 503 und die Platine 501, so dass das Feldgerätedisplay 401 eine kompakte Einheit 401 bzw. ein kompaktes Modul 401 bildet. In Bereichen des LCD-Displaymoduls 601 ist das Gehäuse 301 transparent ausgeführt oder gar nicht vorhanden, um die Ablesbarkeit sicherzustellen.

Fig. 11 zeigt eine Schnittdarstellung durch ein Feldgerätedisplay mit einer Lichtverteilungseinrichtung und einer Heizeinrichtung. Die Fig. 11 zeigt die Heizeinrichtung 1101, die ähnlich der Anordnung der Lichtverteilungseinrichtung 503 in Blickrichtung 502 bzw. Ableserichtung 502 gesehen hinter dem LCD-Modul 501 und somit hinter der Lichtverteilungseinrichtung 503 angeordnet ist. Die Heizeinrichtung 1101 kann eine weitere Zusatzfunktion zu der Displaybeleuchtungseinrichtung 503 darstellen und der Erwärmung des Displaymoduls 601 dienen. Durch die Erwärmung des Displaymoduls 601 ist es möglich, dass sich Kristalle, die sich in dem Displaymodul 601 befinden, schneller bewegen können und folglich eine schnellere Anzeige möglich wird.

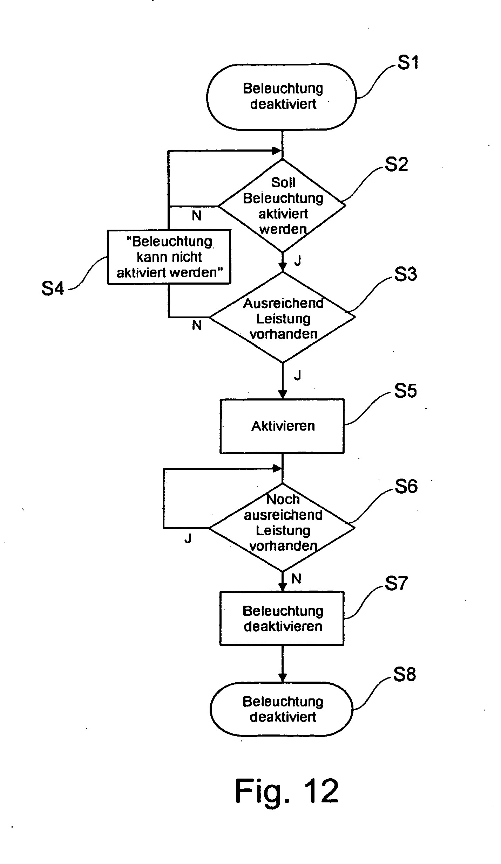

Fig. 12 zeigt ein Flussdiagramm eines Verfahrens zum Beleuchten eines Feldgerätedisplays gemäß einem Ausführungsbeispiel der vorliegenden Erfindung. Das Verfahren startet in Schritt S 1 mit einer deaktivierten Beleuchtung, d. h. dass die Lichterzeugungseinrichtung ausgeschalten ist. Es erfolgt in Schritt S2 eine Abfrage, ob die Beleuchtung aktiviert werden soll. Wenn die Beleuchtung nicht aktiviert werden soll, bleibt die Beleuchtungsanordnung in dem deaktivierten Zustand. Sollte eine Beleuchtung erwünscht sein, erfolgt im Schritt S3 eine Überprüfung, ob ausreichend Leistung für eine Beleuchtung vorhanden ist.

Ist keine ausreichende Leistung für eine Beleuchtung vorhanden, so wird in Schritt S4 auf dem Display ein Hinweis eingeblendet, dass die Beleuchtung nicht aktiviert werden kann. Sollte ausreichend Leistung zur Verfügung stehen, so erfolgt in Schritt S5 eine Aktivierung der Beleuchtung, wodurch das Display beleuchtet wird.

Während der Beleuchtung erfolgt mit Schritt S6 eine ständige Überprüfung, ob die Leistung, die zur Verfügung steht, ausreicht, das Display zu beleuchten. Solange eine ausreichende Leistung vorhanden ist, wird in dem aktivierten Zustand geblieben.

Sollte die Leistung für eine Beleuchtung nicht mehr ausreichen, so erfolgt in Schritt S7 eine Deaktivierung der Beleuchtung. Die Deaktivierung der Beleuchtung kann auch nach Ablauf eines Zeitgliedes erreicht werden. Schließlich befindet sich die Beleuchtung in Schritt S8 wieder in dem deaktivierten Zustand.

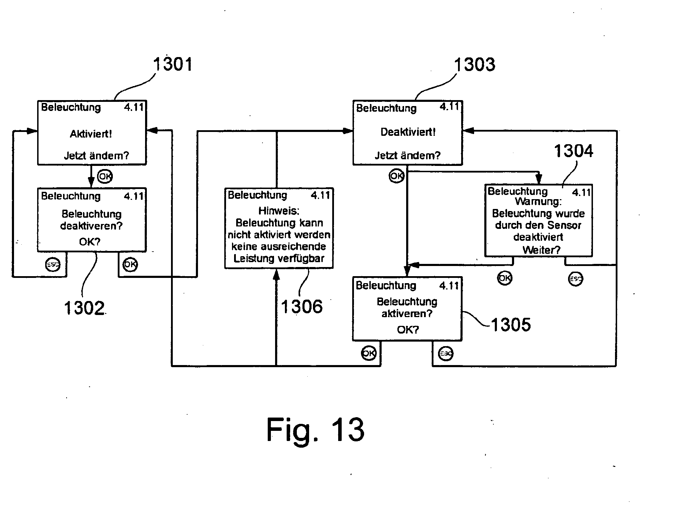

Fig. 13 zeigt ein Zustandsdiagramm, insbesondere eine Menüstruktur für ein Verfahren zum Beleuchten eines Feldgerätedisplays gemäß einem exemplarischen Ausführungsbeispiel der vorliegenden Erfindung. Zur Beleuchtung des Displays ist eine der Eingabeeinrichtungen 303 als OK-Taste eingerichtet und eine andere als ESC-Taste. In dem Zustand 1301 ist die Beleuchtung aktiviert und es erscheint die Anzeige "jetzt ändern?" im Menü auf dem Display. Wenn mittels Tastendruck auf die OK-Taste die Änderung bestätigt wird, erfolgt im Menüpunkt 1302 die Überprüfung, ob die Beleuchtung wirklich deaktiviert werden soll. Wird in dem Zustand 1302 die ESC-Taste gedrückt, wird in den Zustand 1301 zurückgesprungen. Wird die Anfrage in Zustand 1302 mit der OK-Taste bestätigt, erfolgt ein Sprung in den Zustand 1303, in dem die Beleuchtung deaktiviert ist. Es erscheint auf dem Display die Anzeige "deaktiviert" und "jetzt ändern?".

Wird in dem Zustand 1303 die OK-Taste gedrückt, erfolgt im Zustand 1304eine Anzeige auf dem Display "Warnung: Beleuchtung wurde durch den Sensor deaktiviert". Wird in dem Zustand 1304 die ESC-Taste gedrückt, wird in den deaktivierten Zustand 1303 zurückgesprungen. Erfolgt im Zustand 1304 die Betätigung der OK-Taste so wird in Zustand 1305 gesprungen, in dem die Abfrage "Beleuchtung aktivieren" erscheint. Wird in diesem Zustand 1305 die ESC-Taste gedrückt, wird ebenfalls wieder in den deaktivierten Zustand 1303 zurückgesprungen.

Erfolgt jedoch in dem Zustand 1305 die Betätigung der OK-Taste erfolgt-eine Überprüfung, ob ausreichend Leistung für den Betrieb einer Beleuchtung vorhanden ist. Wenn ausreichend Leistung vorhanden ist, wird in den aktiven Zustand 1301 gesprungen und sollte nicht genügend Leistung vorhanden sein, findet ein Sprung in den Zustand 1306 statt. In dem Zustand 1306 erscheint auf dem Display die Anzeige "Hinweis: Beleuchtung kann nicht aktiviert werden, keine ausreichende Leistung verfügbar" und nach Ablauf eines Zeitgliedes wird in den Zustand 1303 zurückgesprungen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schaltkreis-Anordnung für ein Feldgerät, wobei die Schaltkreis-Anordnung aufweist:
eine Leistungsmesseinrichtung (203), eingerichtet zum Bestimmen einer in dem Feldgerät vorhandenen Leistung;
eine Leistungsverteilungseinrichtung, wobei die Leistungsverteilungseinrichtung eingerichtet ist zum:
Bestimmen, ob in dem Feldgerät eine überschüssige Leistung für den Betrieb einer Displaybeleuchtung vorhanden ist;
Weiterleiten der überschüssigen Leistung an eine Displaybeleuchtungsansteuereinrichtung (103, 207, 913) zum Betreiben der Displaybeleuchtung.

2. Schaltkreis-Anordnung nach Anspruch 1, eingerichtet zum Betrieb mit einem Feldgerät ausgewählt aus der Gruppe bestehend aus HART® 2-Leiterfeldgerät, HART® 4-Leiterfeldgerät, 4 bis 20 mA Feldgerät, Profibus Feldgerät und Fieldbusfoundation Feldgerät.

3. Schaltkreis-Anordnung nach Anspruch 1 oder 2, wobei die Leistungsverteilungseinrichtung weiter aufweist:
eine Ex-Schutzeinrichtung (906) zum Begrenzen der überschüssigen Leistung, so dass das Feldgerät in einer Ex-Schutz Umgebung betreibbar ist.

4. Schaltkreis-Anordnung nach einem der Ansprüche 1 bis 3, wobei die Leistungsverteilungseinrichtung weiter eingerichtet ist, die Displaybeleuchtungsansteuereinrichtung (103, 207, 913, 208) zu aktivieren.

5. Schaltkreis-Anordnung nach einem der Ansprüche 1 bis 4, ferner aufweisend: die Displaybeleuchtungsansteuereinrichtung (909, 913), eingerichtet zum:
Bestimmen, ob die überschüssige Leistung für die Displaybeleuchtung ausreichend ist;
Ansteuern einer Leuchteinrichtung, wenn ausreichend Leistung vorhanden ist.

6. Schaltkreis-Anordnung nach Anspruch 5, wobei die Displaybeleuchtungsansteuereinrichtung weiter aufweist eine Konstantstromquelle und / oder eine PWM-Ansteuereinrichtung (917), zum Betrieb der Leuchteinrichtung.

7. Schaltkreis-Anordnung nach Anspruch 5 oder 6, wobei die Displaybeleuchtungsansteuereinrichtung weiter aufweist:
eine Beleuchtungswahleinrichtung (303), zum:
Erkennen, ob eine Beleuchtung der Displaybeleuchtung des Feldgerätedisplays erfolgen soll;
wobei die Displaybeleuchtungsansteuereinrichtung (103, 207, 913) weiter eingerichtet ist:
zum Ansteuern der Leuchteinrichtung (104), wenn ausreichend Leistung vorhanden ist, und wenn mittels Beleuchtungswahleinrichtung (303) erkannt wird, dass eine Anzeige erfolgen soll.

8. Schaltkreis-Anordnung nach einem der Ansprüche 5 bis 7, die Displaybeleuchtungsansteuereinrichtung weiter umfassend eine Ex-Schutzeinrichtung (908) zum Begrenzen der überschüssigen Leistung, so dass das Feldgerät in einer Ex-Schutz Umgebung betreibbar ist.

9. Schaltkreis-Anordnung nach einem der Ansprüche 1 bis 8, weiter umfassend:
einen Leistungsspeicher (105);
wobei der Leistungsspeicher (105) derart eingerichtet ist, dass überschüssige Leistung gespeichert wird.

10. Beleuchtungsanordnung für ein Feldgerätedisplay, aufweisend:
eine Schaltkreis-Anordnung (102) nach einem der Ansprüche 1 bis 9;
eine Leuchteinrichtung (104) für ein Feldgerätedisplaymodul, aufweisend:
eine Lichterzeugungseinrichtung zum Erzeugen von Licht;
eine Lichtverteilungseinrichtung (503) zum räumlichen Verteilen des Lichtes;
wobei die Form der Lichtverteilungseinrichtung (503) an die Form einer Rückseite eines Feldgerätedisplaymoduls (601) angepasst ist;
wobei die Lichterzeugungseinrichtung eingerichtet ist, die Lichtverteilungseinrichtung (503) zu beleuchtet;
wobei die Lichtverteilungseinrichtung (503) eingerichtet ist, Licht gleichmäßig über das Feldgerätedisplaymodul (601) zu verteilen;
wobei die Leistungsverteilungseinrichtung mit der Displaybeleuchtungsansteuereinrichtung (103, 207, 913) gekoppelt ist; und
wobei die Displaybeleuchtungsansteuereinrichtung (103, 207, 913) mit der Leuchteinrichtung (104) gekoppelt ist.

11. Verfahren zum Ansteuern einer Leuchteinrichtung für ein Feldgerätedisplay, aufweisend:
Messen einer in einem Feldgerät vorhandenen überschüssigen Leistung;
Bestimmen, ob die vorhandene überschüssige Leistung für die Beleuchtung des feldgerätedisplays ausreichend ist;
Ansteuern einer Leuchteinrichtung (104) zum Betreiben mit der vorhandenen überschüssigen Leistung, wenn bestimmt worden ist, dass die vorhandene überschüssige Leistung für die Beleuchtung ausreichend ist.

12. Computerlesbares Medium, in dem ein Programm zum Ansteuern einer Leuchteinrichtung für ein Feldgerätedisplay gespeichert ist, wobei das Programm, wenn es von einem Prozessor ausgeführt wird, aufweist:
Messen einer in einem Feldgerät vorhandenen überschüssigen Leistung;
Bestimmen, ob die vorhandene überschüssige Leistung für die Beleuchtung des feldgerätedisplays ausreichend ist;
Ansteuern der Leuchteinrichtung (104) zum Betreiben mit der vorhandenen überschüssigen Leistung, wenn bestimmt worden ist, dass die vorhandene überschüssige Leistung für die Beleuchtung ausreichend ist.

13. Programmelement zum Ansteuern einer Leuchteinrichtung für ein Feldgerätedisplay, wobei das Programmelement, wenn es von einem Prozessor ausgeführt wird, aufweist:
Messen einer in einem Feldgerät vorhandenen überschüssigen Leistung;
Bestimmen, ob die vorhandene überschüssige Leistung für die Beleuchtung des feldgerätedisplays ausreichend ist;
Ansteuern der Leuchteinrichtung (104) zum Betreiben mit der vorhandenen überschüssigen Leistung, wenn bestimmt worden ist, dass die vorhandene überschüssige Leistung für die Beleuchtung ausreichend ist.

## Claims

1. A circuit arrangement for a field device, wherein the circuit arrangement comprises:
a power measuring device (203) designed for determining a power present in the field device;
a power distribution device, wherein the power distribution device is equipped for:
determining whether in the field device there is excess power for operating a display illumination;
forwarding the excess power to a display-illumination selection device (103, 207, 913) for operating the display illumination.

2. The circuit arrangement according to claim 1, designed for operation with a field device selected from the group comprising a HART® 2-conductor field device, HART® 4-conductor field device, 4 to 20 mA field device, Profibus field device and a Fieldbus foundation field device.

3. The circuit arrangement according to claim 1 or 2, wherein the power distribution device further comprises:
an explosion protection device (906) for limiting the excess power so that the field device can be operated in a potentially explosive environment.

4. The circuit arrangement according to any one of claims 1 to 3, wherein the power distribution device is further designed for activating the display-illumination selection device (103, 207, 913, 208).

5. The circuit arrangement according to any one of claims 1 to 4, further comprising: the display-illumination selection device (909, 913) for:
determining whether the excess power is sufficient for the display illumination;
selecting an illumination device if there is sufficient power.

6. The circuit arrangement according to claim 5, wherein the display-illumination selection device further comprises a constant power source and/or a PWM selection device (917) for operating the illumination device.

7. The circuit arrangement according to claim 5 or 6, wherein the display-illumination selection device further comprises:
an illumination selecting device (303) for:
detecting whether illumination of the display illumination of the field device display is to take place;
wherein the display-illumination selection device (103, 207, 913) is further designed for:
selecting the illumination device (104) if there is sufficient power and if by means of the illumination selecting device (303) it has been detected that display should take place.

8. The circuit arrangement according to any one of claims 5 to 7, with the display-illumination selection device further comprising an explosion protection device (908) for limiting the excess power so that the field device can be operated in a potentially explosive environment.

9. The circuit arrangement according to any one of claims 1 to 8, further comprising:
a power storage device (105);
wherein the power storage device (105) is designed so that excess power is stored.

10. An illumination arrangement for a field device display, comprising:
a circuit arrangement (102) according to any one of claims 1 to 9;
an illumination device (104) for a field-device display module, comprising:
a light generating device for generating light;
a light distribution device (503) for the spatial distribution of the light;
wherein the form of the light distribution device (503) matches the form of the rear of a field device display module (601);
wherein the light generating device is designed for illuminating the light distribution device (503);
wherein the light distribution device (503) is designed for distributing light evenly over the field-device display module (601);
wherein the power distribution device is coupled to the display-illumination selection device (103, 207, 913); and
wherein the display-illumination selection device (103, 207, 913) is coupled to the illumination device (104).

11. A method for selecting an illumination device for a field device display, comprising:
measuring the excess power present in a field device;
determining whether the existing excess power is sufficient for illuminating the field device display;
selecting an illumination device (104) for operation with the existing excess power if it has been determined that the existing excess power is sufficient for illumination.

12. A computer-readable medium in which a program for selecting an illumination device for a field device display is stored, wherein the program, when executed on a processor, comprises:
measuring the excess power that exists in a field device;
determining whether the existing excess power is sufficient for illuminating the field device display;
selecting the illumination device (104) for operation with the existing excess power if it has been determined that the existing excessive power is sufficient for illumination.

13. A program element for selecting an illumination device for a field device display, wherein the program element, when executed on a processor, comprises:
measuring the excess power that exists in a field device;
determining whether the existing excess power is sufficient for illuminating the field device display;
selecting the illumination device (104) for operation with the existing excess power if it has been determined that the existing excessive power is sufficient for illumination.

## Revendications

1. Agencement de circuit pour un appareil de terrain, l'agencement de circuit comportant :
un dispositif de mesure de puissance (203), adapté pour déterminer une puissance existant dans l'appareil de terrain,
un dispositif de distribution de puissance, le dispositif de distribution de puissance étant adapté pour :
déterminer s'il existe, dans l'appareil de terrain, une puissance excessive pour le fonctionnement d'un éclairage d'affichage,
transmettre la puissance excessive à un dispositif de commande d'éclairage d'affichage (103, 207, 913) pour faire fonctionner l'éclairage d'affichage.

2. Agencement de circuit selon la revendication 1, adapté pour fonctionner avec un appareil de terrain choisi parmi le groupe constitué d'un appareil de terrain à 2 fils HART®, d'un appareil de terrain à 4 fils HART®, d'un appareil de terrain de 4 à 20 mA, d'un appareil de terrain Profibus et d'un appareil de terrain Fieldbus Foundation.

3. Agencement de circuit selon la revendication 1 ou 2, dans lequel le dispositif de distribution de puissance comporte en outre :
un dispositif de protection Ex (906) pour limiter la puissance excessive, de telle sorte que l'appareil de terrain peut fonctionner dans un environnement sous protection Ex.

4. Agencement de circuit selon l'une des revendications 1 à 3, dans lequel le dispositif de distribution de puissance est également adapté pour activer le dispositif de commande d'éclairage d'affichage (103, 207, 913, 208).

5. Agencement de circuit selon l'une des revendications 1 à 4, comportant en outre :
un dispositif de commande d'éclairage d'affichage (909, 913), adapté pour :
déterminer si la puissance excessive est suffisante pour l'éclairage d'affichage,
commander un dispositif d'éclairage lorsqu'il existe une puissance suffisante.

6. Agencement de circuit selon la revendication 5, dans lequel le dispositif de commande d'éclairage d'affichage comporte de plus une source de courant constant et/ou un dispositif de commande PWM (917) pour faire fonctionner le dispositif d'éclairage.

7. Agencement de circuit selon la revendication 5 ou 6, dans lequel le dispositif de commande d'éclairage d'affichage comporte en outre :
un dispositif de sélection d'éclairage (303) pour :
détecter si un éclairage de l'éclairage d'affichage de l'affichage d'appareil de terrain doit être réalisé,
le dispositif de commande d'éclairage d'affichage (103, 207, 913) étant également adapté :
pour commander le dispositif d'éclairage (104) lorsqu'il existe une puissance suffisante et lorsque l'on détecte, au moyen du dispositif de sélection d'éclairage (303), qu'un affichage doit être effectué.

8. Agencement de circuit selon l'une des revendications 5 à 7, le dispositif de commande d'éclairage d'affichage comportant de plus un dispositif de protection Ex (908) pour limiter la puissance excessive, de telle sorte que l'appareil de terrain peut fonctionner dans un environnement sous protection Ex.

9. Agencement de circuit selon l'une des revendications 1 à 8, comportant en outre :
un condensateur de puissance (105),
le condensateur de puissance (105) étant conçu de manière à accumuler la puissance excessive.

10. Agencement d'éclairage pour un affichage d'appareil de terrain, comportant :
un agencement de circuit (102) selon l'une des revendications 1 à 9,
un dispositif d'éclairage (104) pour un module d'affichage d'appareil de terrain, comportant :
un dispositif de génération de lumière pour générer de la lumière,
un dispositif de distribution de lumière (503) pour distribuer la lumière dans l'espace,
dans lequel la forme du dispositif de distribution de lumière (503) est adaptée à la forme d'une face arrière d'un module d'affichage d'appareil de terrain (601),
dans lequel le dispositif de génération de lumière est adapté pour éclairer le dispositif de distribution de lumière (503),
dans lequel le dispositif de distribution de lumière (503) est adapté pour distribuer la lumière de manière uniforme dans le module d'affichage d'appareil de terrain (601),
dans lequel le dispositif de distribution de puissance est couplé au dispositif de commande d'éclairage d'affichage (103, 207, 913), et
dans lequel le dispositif de commande d'éclairage d'affichage (103, 207, 913) est couplé au dispositif d'éclairage (104).

11. Procédé pour commander un dispositif d'éclairage pour un affichage d'appareil de terrain, comportant les étapes consistant à :
mesurer une puissance excessive existant dans un appareil de terrain,
déterminer si la puissance excessive existante est suffisante pour l'éclairage de l'affichage d'appareil de terrain,
commander un dispositif d'éclairage (104) pour le faire fonctionner avec la puissance excessive existante, lorsque l'on a déterminé que la puissance excessive existante est suffisante pour l'éclairage.

12. Support lisible par ordinateur, dans lequel est mémorisé un programme de commande d'un dispositif d'éclairage pour un affichage d'appareil de terrain, le programme, lorsqu'il est exécuté par un processeur, incluant les étapes consistant à:
mesurer une puissance excessive existant dans un appareil de terrain,
déterminer si la puissance excessive existante est suffisante pour l'éclairage de l'affichage d'appareil de terrain,
commander le dispositif d'éclairage (104) pour le faire fonctionner avec la puissance excessive existante, lorsque l'on a déterminé que la puissance excessive existante est suffisante pour l'éclairage.

13. Elément de programme pour commander un dispositif d'éclairage pour un affichage d'appareil de terrain, l'élément de programme, lorsqu'il est exécuté par un processeur, incluant les étapes consistant à :
mesurer une puissance excessive existant dans un appareil de terrain,
déterminer si la puissance excessive existante est suffisante pour l'éclairage de l'affichage d'appareil de terrain,
commander le dispositif d'éclairage (104) pour le faire fonctionner avec la puissance excessive existante, lorsque l'on a déterminé que la puissance excessive existante est suffisante pour l'éclairage.
